# EUROPÄISCHE PATENTANMELDUNG

(11) **EP 2 626 260 A1**
(43) Veröffentlichungstag der Anmeldung: **14.08.2013**
(21) Anmeldenummer: 13152446.4
(22) Anmeldetag: 24.01.2013
(51) Int. Cl.: B60T 8/00, B60T 8/17, B60T 8/172, B60T 8/32, B61H 5/00, B60T 8/46, B61K 9/00, B61K 9/04, B60T 13/66, B60T 13/68, B60T 17/04, B60T 17/22

(54) **Gleitschutzsystem einer Bremseinrichtung**

(30) Priorität: 13.02.2012 DE 102012202120
(71) Anmelder: Siemens Aktiengesellschaft, 80333 München (DE)
(72) Erfinder: Schmitt, Volker, 91058 Erlangen (DE)

(57) **Zusammenfassung**

Die Erfindung betrifft ein Gleitschutzsystem einer Bremseinrichtung mit einem Gleitschutzgerät und einer Gleitschutzsteuereinrichtung, bei dem zumindest ein Eingang der Gleitschutzsteuereinrichtung mit zumindest einem Ausgang des Gleitschutzgerätes verbunden und mit zumindest einem Gleitschutzsignal des Gleitschutzgerätes beaufschlagt ist.

Zur Vereinfachung und Verbesserung des Gleitschutzes ist vorgesehen, dass die Gleitschutzsteuereinrichtung zur Modellierung des Verhaltens einer kraftschlussabhängigen nicht dynamischen Referenzbremse geeignet ausgebildet ist, in Abhängigkeit eines vorgegebenen Sollwertes und des zumindest einen Gleitschutzsignals einen gleitschutzkorrigierten elektrischen Sollwert zu erzeugen, der einem von der Referenzbremse bei einer Referenzmessung in Abhängigkeit des Sollwertes und des zumindest einen Gleitschutzsignals erzeugten gleitschutzkorrigierten Bremsmoment entspricht.

## Beschreibung

Die Erfindung betrifft ein Gleitschutzsystem einer Bremseinrichtung mit einem Gleitschutzgerät und einer Gleitschutzsteuereinrichtung, bei dem zumindest ein Eingang der Gleitschutzsteuereinrichtung mit zumindest einem Ausgang des Gleitschutzgerätes verbunden und mit zumindest einem Gleitschutzsignal des Gleitschutzgerätes beaufschlagt ist.

Die Erfindung betrifft auch eine Bremseinrichtung eines Fahrzeugs mit einem derartigen Gleitschutzsystem.

Ferner betrifft die Erfindung ein Gleitschutzverfahren einer Bremseinrichtung bei dem zumindest ein Eingang einer Gleitschutzsteuereinrichtung, der mit zumindest einem Ausgang eines Gleitschutzgerätes verbunden ist, mit zumindest einem Gleitschutzsignal des Gleitschutzgerätes beaufschlagt ist.

Ein gattungsgemäßes Gleitschutzsystem, eine gattungsgemäße Bremseinrichtung und ein gattungsgemäßes Gleitschutzverfahren sind beispielsweise aus der Druckschrift WO 2011/050950 A1 bekannt. Diese Druckschrift zeigt eine Notbremseinrichtung mit einer generatorischen Bremse und einer elektro-pneumatischen Reibungsbremse. Ein erstes Steuergerät dient zur Steuerung der elektro-pneumatischen Reibungsbremse und ein zweites Steuergerät dient zur Steuerung der generatorischen Bremse. Beide Steuergeräte beinhalten jeweils eine geschwindigkeitsbezogene Kennlinie. Dabei zieht das erste Steuergerät Geschwindigkeitssignale von Geschwindigkeitssensoren heran, um anhand seiner Kennlinie einen Sollwert für einen von einem Druckregler zu erzeugenden Vorsteuerdruck für ein Relaisventil zu ermitteln, wobei ein vom Relaisventil aufgrund des Vorsteuerdrucks erzeugter Bremsdruck gemessen und dem ersten Steuergerät rückgemeldet wird. Anhand der Kennlinie des zweiten Steuergerätes wird eine von der jeweils gefahrenen Geschwindigkeit abhängige generatorische Bremskraft erzeugt. Jede der beiden Kennlinien kennzeichnet also jeweils die Abhängigkeit eines Sollwerts von der jeweils gefahrenen Geschwindigkeit des Fahrzeugs. Dabei sind die geschwindigkeitsbezogene Kennlinien der beiden Steuergeräte so aufeinander abgestimmt, dass die Notbremskräfte beider Bremsen eine vorgegebene Verzögerung der Notbremse erreichen, wobei die beiden Steuergeräte durch bidirektionale elektrische Leitungen miteinander kommunizieren, um ein "blending" auszuführen. Unter "blending" wird dabei verstanden, die Bremskraft der Bremseinrichtung zur Schonung der verschleißbehafteten elektro-pneumatischen Reibungsbremse aus einem von der generatorischen Bremse gelieferten ersten Anteil und einem von der elektro-pneumatischen Reibungsbremse gelieferten zweiten Anteil zusammen zu setzen. Bei dieser Notbremseinrichtung ist ein Steueranschluss des Relaisventils mittels einer Steuerdruckleitung mit dem Druckregler verbunden. In diese Steuerdruckleitung ist eine Gleitschutzsteuereinrichtung in Form eines Magnetventils geschaltet, welches durch ein Gleitschutzgerät in Form eines Steuergerätes über eine elektrische Steuerleitung angesteuert wird.

Der Erfindung liegt die Aufgabe zu Grunde, den Gleitschutz zu vereinfachen und zu verbessern.

Gelöst wird diese Aufgabe bei einem gattungsgemäßen Gleitschutzsystem dadurch, dass die Gleitschutzsteuereinrichtung zur Modellierung des Verhaltens einer kraftschlussabhängigen nicht dynamischen Referenzbremse geeignet ausgebildet ist, in Abhängigkeit eines vorgegebenen Sollwertes und des zumindest einen Gleitschutzsignals einen gleitschutzkorrigierten elektrischen Sollwert zu erzeugen, der einem von der Referenzbremse bei einer Referenzmessung in Abhängigkeit des Sollwerte und des zumindest einen Gleitschutzsignals erzeugten gleitschutzkorrigierten Bremsmoment entspricht.

Das erfindungsgemäße Gleitschutzsystem schafft durch die Bereitstellung des gleitschutzkorrigierten elektrischen Sollwertes in vorteilhafter Weise die Möglichkeit sowohl eine dynamische Bremse als auch eine nicht dynamische elektrisch anzusteuern und dabei herkömmliches Gleitschutzgeräte mit herkömmlicher Gleitschutzsoftware zu verwenden. So kann insbesondere ein Gleitschutzgerät zu Einsatz kommen, dass bisher bei herkömmlichen pneumatischen Bremseinrichtungen zur Gleitschutzsteuerung verwendet wird.

Als vorteilhaft wird es angesehen, wenn die Modellierung des Verhaltens der kraftschlussabhängigen nicht dynamischen Referenzbremse mittels einer RC-Zeitglieder-Schaltung oder einer Operationsverstärker-Schaltung umgesetzt ist, die den gleitschutzkorrigierten elektrischen Sollwert in Form eines Spannungssignals erzeugt.

Als vorteilhaft wird es auch angesehen, wenn ein Eingang einer Regeleinrichtung mit einem Ausgang der Gleitschutzsteuereinrichtung verbunden und mit dem gleitschutzkorrigierten elektrischen Sollwert beaufschlagt ist.

Dabei kann die Regeleinrichtung geeignet ausgebildet sein, in Abhängigkeit des gleitschutzkorrigierten elektrischen Sollwertes eine erste Größe zu regeln, die das Bremsmoment einer kraftschlussabhängigen dynamischen Bremse steuert. So kann die Regeleinrichtung beispielsweise geeignet ausgebildet sein, in Abhängigkeit des gleitschutzkorrigierten elektrischen Sollwertes einen Erregerstrom einer rotierenden Wirbelstrombremse zu regeln.

Ferner kann die Regeleinrichtung geeignet ausgebildet sein, in Abhängigkeit des gleitschutzkorrigierten elektrischen Sollwertes eine zweite Größe zu regeln, die das Bremsmoment einer kraftschlussabhängigen nicht dynamischen Bremse steuert. So kann beispielsweise die Regeleinrichtung geeignet ausgebildet ist, in Abhängigkeit des gleitschutzkorrigierten elektrischen Sollwertes zumindest ein Ansteuersignal einer Ventileinrichtung einer direkt oder indirekt wirkenden pneumatischen Reibungsbremse zu regeln.

Als vorteilhaft wird es auch angesehen, wenn das Gleitschutzsystem eine Ansteuereinrichtung aufweist, wobei zumindest ein Eingang der Ansteuereinrichtung mit dem zumindest einen Ausgang des Gleitschutzgerät verbunden und mit dem zumindest einen Gleitschutzsignal des Gleitschutzgerätes beaufschlagt ist.

Dabei ist es vorteilhaft, wenn zumindest eine Verbindungsleitung einen Ausgang der Regeleinrichtung mit einem Eingang der Ventileinrichtung verbindet, und wenn die Ansteuereinrichtung zumindest ein Schaltelement aufweist, das geeignet ausgebildet ist die Freigabe der zumindest einen Verbindungsleitung in Abhängigkeit des zumindest einen Gleitschutzsignals zu regeln.

Alternativ hierzu ist es vorteilhaft, wenn zumindest eine Verbindungsleitung einen Ausgang der ersten Regeleinrichtung mit einem Eingang der Ventileinrichtung verbindet, wobei ein pneumatischer Eingang der Ventileinrichtung mit einem pneumatischen Ausgang einer Hauptbehälterluftleitung und ein pneumatischer Ausgang der Ventileinrichtung mit einem Eingang eines Zwischenreservoirs verbunden sind, wenn die Ansteuereinrichtung eine Gleitschutzventileinrichtung aufweist, wobei zumindest ein Eingang der Gleitschutzventileinrichtung den zumindest einen Eingang der Ansteuereinrichtung bildet und wenn ein pneumatischer Eingang der Gleitschutzventileinrichtung mit einem Ausgang des Zwischenreservoirs und ein pneumatischer Ausgang der Gleitschutzventileinrichtung mit einer Druckkammer der pneumatischen Bremse verbunden sind.

Das erfindungsgemäße Gleitschutzsystem kann insbesondere bei einer Bremseinrichtung eines Fahrzeugs zum Einsatz kommen. Vorzugsweise umfasst diese Bremseinrichtung zumindest eine kraftschlussabhängige dynamische erste Bremse, die ein erstes Bremsmoment in einen Radsatz eines Fahrzeugs einleitet, eine kraftschlussabhängige nicht dynamischen zweiten Bremse, die ein zweites Bremsmoment in den Radsatz des Fahrzeugs einleitet, und eine Messeinrichtung die geeignet ausgebildet ist, einen Ist-Wert einer Messgröße zu erfassen, der einem aus den beiden Bremsmomenten resultierenden Gesamtbremsmoment entspricht, wobei die Regeleinrichtung des Gleitschutzsystems geeignet ausgebildet ist, den Ist-Wert der Messgröße zu erfassen und das daraus bestimmte Gesamtbremsmoment auf den gleitschutzkorrigierten elektrischen Sollwert zu regeln.

Als vorteilhaft wird es angesehen, wenn die Bremseinrichtung eine Bremsmomentstütze aufweist, an der über eingangsseitige Wirkverbindungen mit den beiden Bremsen die beiden Bremsmomente abgestützt sind und mittels derer über eine ausgangsseitige Wirkverbindung mit dem Fahrzeug das aus den beiden Bremsmomenten resultierendes Gesamtbremsmoment am Fahrzeug abgestützt ist, wobei die Messeinrichtung in die Bremsmomentstütze integriert ist.

Gelöst wird die erfindungsgemäße Aufgabe bei einem gattungsgemäßen Gleitschutzverfahren dadurch, dass die Gleitschutzsteuereinrichtung zur Modellierung des Verhaltens einer kraftschlussabhängigen nicht dynamischen Referenzbremse in Abhängigkeit eines vorgegebenen Sollwertes und des zumindest einen Gleitschutzsignals einen gleitschutzkorrigierten elektrischen Sollwert erzeugt, der einem von der Referenzbremse bei einer Referenzmessung in Abhängigkeit des Sollwertes und des zumindest einen Gleitschutzsignals erzeugten gleitschutzkorrigierten Bremsmoment entspricht.

Vorzugsweise wird dabei eine Regeleinrichtung mit dem gleitschutzkorrigierten elektrischen Sollwert beaufschlagt wobei die Regeleinrichtung in Abhängigkeit des gleitschutzkorrigierten elektrischen Sollwertes eine erste Größe regelt, die das Bremsmoment einer kraftschlussabhängigen dynamischen Bremse steuert und/oder die Regeleinrichtung in Abhängigkeit des gleitschutzkorrigierten elektrischen Sollwertes eine zweite Größe regelt, die das Bremsmoment einer kraftschlussabhängigen nicht dynamischen Bremse steuert.

Zur weiteren Erläuterung der Erfindung sind in der
- Figur 1: ein erfindungsgemäßes Schienenfahrzeug mit Radsätzen, bei dem jedem der Radsätze eine erfindungsgemäße Bremseinrichtungen zugeordnet ist, in der
- Figuren 2 und 3: zwei Ansichten eines Ausschnitts der erfindungsgemäßen Bremseinrichtung, in der
- Figur 4: eine schematische Darstellung des strukturierten Aufbaus einer ersten Ausführungsform der erfindungsgemäßen Bremseinrichtung, in der
- Figur 5: eine schematische Darstellung des strukturierten Aufbaus einer herkömmlichen Bremseinrichtung mit einer nicht dynamischen Bremse, deren Verhalten bei einem Gleitschutzeingriff bei der erfindungsgemäßen Bremseinrichtung modelliert wird, in der
- Figur 6: eine schematische Darstellung des strukturierten Aufbaus einer zweiten Ausführungsform der erfindungsgemäßen Bremseinrichtung und in der
- Figur 7: eine schematische Darstellung des strukturierten Aufbaus einer dritten Ausführungsform der erfindungsgemäßen Bremseinrichtung dargestellt.

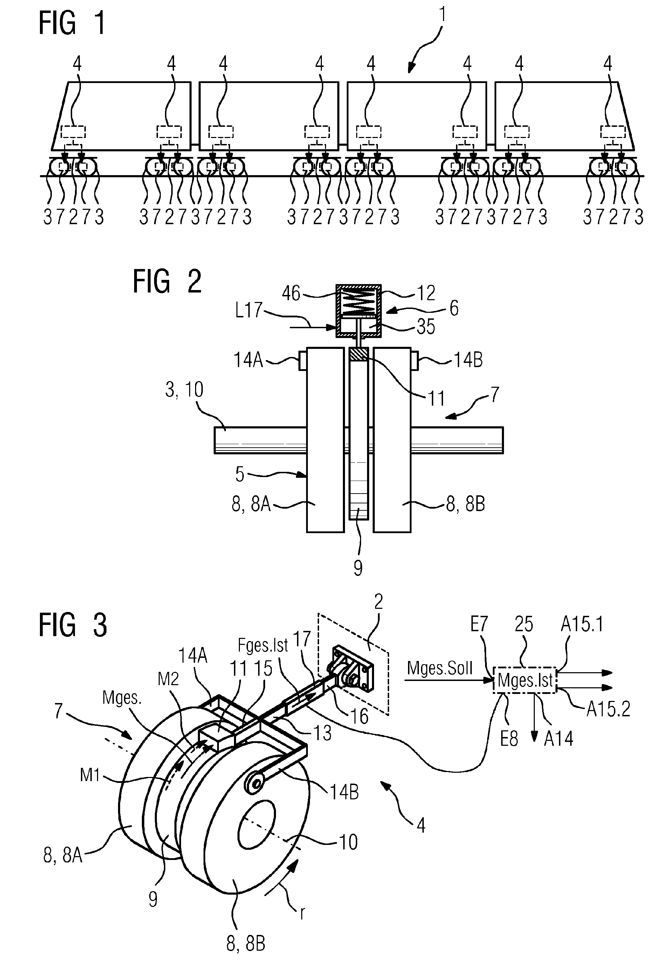

Die Figur 1 zeigt ein Fahrzeug 1 in Form eines Schienenfahrzeugs mit Drehgestellen 2 mit jeweils zwei Radsätzen 3 und mit den Radsätzen 3 zugeordneten erfindungsgemäßen Bremseinrichtungen 4.

Gemäß den Figuren 2 und 3 umfasst die erfindungsgemäße Bremseinrichtung 4 einerseits eine kraftschlussabhängige dynamische erste Bremse 5 in Form einer rotierenden Wirbelstrombremse (im Folgenden auch kurz als "Retarder" bezeichnet), die ein erstes Bremsmoment M1 in den zugeordneten Radsatz 3 des Fahrzeugs einleitet und andererseits eine kraftschlussabhängige nicht dynamische zweite Bremse 6 in Form einer indirekt wirkende pneumatische Reibungsbremse (im Folgenden auch kurz als "Stoppbremse" bezeichnet), die ein zweites Bremsmoment M2 in den Radsatz 3 einleitet.

Teile der beiden Bremsen 5 und 6 bilden eine Retarder-Reibungsbremsen-Einheit 7, wie Sie im Wesentlichen bereits aus der Druckschrift WO 2011/144526 A1 bekannt ist. Ein Stator 8 des Retarders ist dabei beispielsweise in zwei Statorteile 8A, 8B aufgeteilt, zwischen denen ein einteiliger Rotor 9 auf einer Achse 10 des Radsatzes 3 befestigt ist. Dem äußeren Umfang des Rotors 9 gegenüberliegend ist ein Reibungselement 11 der Stoppbremse 6 angeordnet, das mittels eines Krafterzeugers in Form eines indirekten Federspeicherzylinders 12 unter Erzielung einer Reibungsbremsung im Bedarfsfalle gegen den äußeren Umfang des Rotors 9 geführt werden kann.

Wie die Figur 2 3 zeigt, umfasst die erfindungsgemäße Bremseinrichtung 4 eine Bremsmomentstütze 13, an der über eingangsseitige Wirkverbindungen 14A, 14B und 15 mit den beiden Bremsen 5, 6 die beiden der Drehrichtung r entgegen gerichteten Bremsmomente M1 und M2 abgestützt sind und mittels derer über eine ausgangsseitige Wirkverbindung 16 mit dem Fahrzeug ein aus den beiden Bremsmomenten M1 und M2 resultierendes Gesamtbremsmoment Mges am Fahrzeug abgestützt ist.

Anstelle der gezeigten Ausführungsform kann auch eine alternative Ausführungsform umgesetzt sein, bei der das Bremsmoment der M2 der Stoppbremse mittelbar über den Stator des Retarders an der Bremsmomentstütze abgestützt ist; bei der also der Stator des Retardes Teil der eingangsseitigen Wirkverbindung ist, mittels derer das Bremsmoment M2 der Stoppbremse an der Bremsmomentstütze abgestützt ist.

Das Gesamtbremsmoment Mges ist mittels der Bremsmomentstütze 13 über die ausgangsseitige Wirkverbindung 16 am Drehgestell 2 abgestützt, das den Radsatz 3 des Fahrzeugs trägt, auf den das Gesamtbremsmoment Mges wirkt.

Die Bremsmomentstütze 13 weist im Zuge der ausgangsseitigen Wirkverbindung 16 eine Messeinrichtung 17 auf, die geeignet ausgebildet ist, einen Ist-Wert Fges.Ist einer dem Gesamtbremsmomentes Mges entsprechenden Messgröße F zu erfassen.

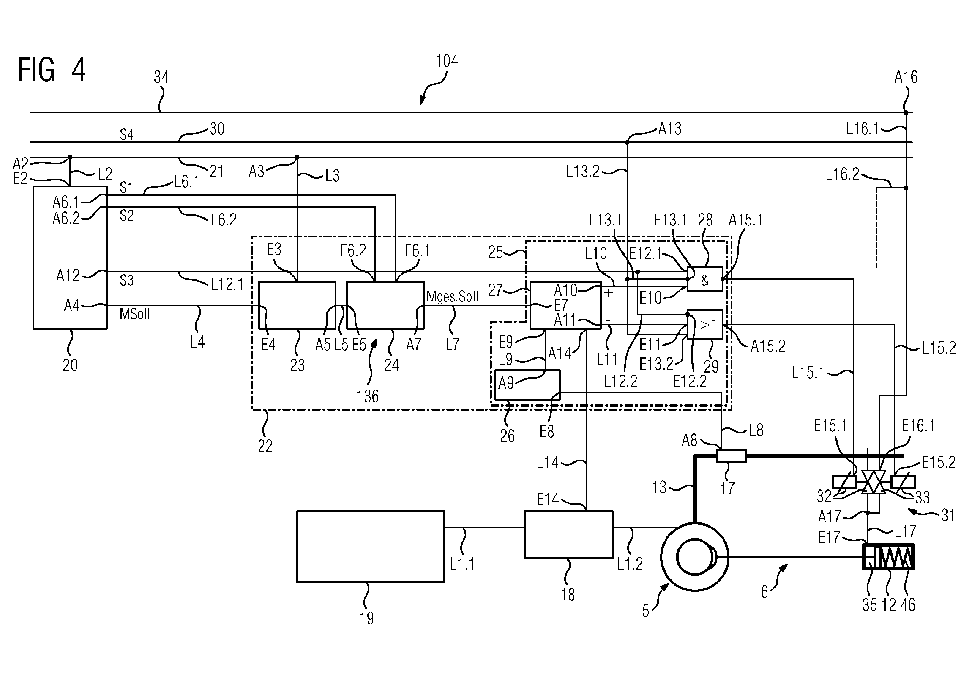

Die Figuren 4, 6 und 7 zeigen drei Ausführungsformen 104, 204 und 304 der erfindungsgemäßen Bremseinrichtung. Bei allen drei Ausführungsformen umfasst die kraftschlussabhängige dynamische erste Bremse 5 (hier der Retarder) neben den bereits in der Figur 2 gezeigten Teilen eine über eine Versorgungsleitung L1.1 an eine Ansteuerung 18 des Retarders angeschlossene Energieversorgung 19. Dabei ist die Ansteuerung 18 über eine Verbindungsleitung L1.2 mit dem Retarder verbunden. Außerdem umfasst die erfindungsgemäße Bremseinrichtung ein Bremssteuergerät 20, das im Folgenden auch als Gleitschutzgerät bezeichnet ist, da es Gleitschutzsignale S1, S2 erzeugt und somit auch eine Gleitschutzfunktion erfüllt. Zum Erfassen eines Bremssignals - hier in Form eines Schnellbremssignals SBS - ist ein Eingang E2 des Bremssteuergerätes 20 über eine Verbindungsleitung L2 an einen Ausgang einer Bremssteuerleitung 21 angeschlossen, wobei die Bremssteuerleitung hier eine Schnellbremsschleife ist.

Weiterhin verfügt die erfindungsgemäße Bremseinrichtung über eine hier als Ganzes mit 22 bezeichnete Steuer- und Regelelektronik. Die Steuer- und Regelelektronik 22 weist eine Bremssteuereinrichtung 23, eine Gleitschutzsteuereinrichtung 24 und eine Regeleinrichtung 25 auf, wobei die Regeleinrichtung 25 einen Signalwandler 26, einen elektronischen Regler 27, ein elektronisches UND-Glied 28 sowie ein elektronisches ODER-Glied 29 umfasst.

Zum Erfassen des Schnellbremssignals SBS ist außerdem ein erster Eingang E3 der Bremssteuereinrichtung 23 über eine Verbindungsleitung L3 an einen Ausgang A3 der Bremssteuerleitung (Schnellbremsschleife) 21 angeschlossen. Ein zweiter Eingang E4 der Bremssteuereinrichtung 23 ist über eine Verbindungsleitung L4 mit einem ersten Ausgang A4 des Bremssteuergerätes 20 verbunden ist, um vom Bremssteuergerätes 20 einen dem Schnellbremssignals SBS entsprechenden vorgegebenen Sollwert MSoll abzurufen.

Ein Ausgang A5 der Bremssteuereinrichtung 23 ist über eine Verbindungsleitung L5 mit einem ersten Eingang E5 der Gleitschutzsteuereinrichtung 21 verbunden, um den vorgegebenen Sollwert MSoll an die Gleitschutzsteuereinrichtung 21 weiter zu leiten.

Zur Übermittlung der binären Gleitschutzsignale S1, S2 sind ein zweiter Eingang E6.1 über eine Verbindungsleitung L6.1 mit einem zweiten Ausgang A6.1 des Bremssteuergerätes 20 und ein dritter Eingang E6.2 über eine Verbindungsleitung L6.2 mit einem dritten Ausgang A6.2 des Bremssteuergerätes 20 verbunden.

Weiterhin verbindet eine Verbindungsleitung L7 einen mit E7 bezeichneten ersten Eingang des elektronischen Reglers 27, der zugleich ein erster Eingang der Regeleinrichtung 25 ist, mit einem Ausgang A7 der Gleitschutzsteuereinrichtung 21.

Ferner verbindet eine Verbindungsleitung L8 einen mit E8 bezeichneten Eingang des Signalwandler 26, der zugleich ein zweiter Eingang der Regeleinrichtung 25 ist, mit einem Ausgang A8 der Messeinrichtung 17, wobei ein Ausgang A9 des Signalwandlers 26 über eine Verbindungsleitung L9 mit einem zweiten Eingang E9 des elektronischen Reglers 27 verbunden ist.

Ein mit A10 bezeichneter erster Ausgang des elektronischen Reglers 27 ist über eine Verbindungsleitung L10 an einen nicht invertierten ersten Eingang E10 des UND-Gliedes 28 angeschlossen.

Ein mit A11 bezeichneter zweiter Ausgang des elektronischen Reglers 27 ist über eine Verbindungsleitung L11 an einen nicht invertierten ersten Eingang E11 des ODER-Gliedes 29 angeschlossen.

Zur Übergabe eines binären Freigabe-Signals S3 ist ein Ausgang A12 des Bremssteuergerätes 20 zum Einen über eine Verbindungsleitung L12.1 an einen nicht invertierten zweiten Eingang E12.1 des UND-Gliedes 28 und zum Anderen über eine Verbindungsleitung L12.2 an einen invertierten zweiten Eingang E12.2 des ODER-Gliedes 29 angeschlossen.

Zur Übergabe eines binären Notfahrt-Signals S4 ist außerdem ein Ausgang A13 einer Notfahrt-Schleife 30 zum Einen über eine Verbindungsleitung L13.1 an einen invertierten dritten Eingang E13.1 des UND-Gliedes 28 und zum Anderen über eine Verbindungsleitung L13.2 an einen nicht invertierten dritten Eingang E13.2 des ODER-Gliedes 29 angeschlossen.

Zur Regelung der Ansteuerung 18 des Retarders ist ein mit A14 bezeichneten dritter Ausgang des elektronischen Reglers 27, der zugleich ein erster Ausgang der Regeleinrichtung 25 ist, über eine Leitung L14 mit einem Eingang E14 der Ansteuerung 18 verbunden.

Zur Regelung einer dem Federspeicherzylinders 12 vorgeschalteten elektropneumatischen Ventileinrichtung 31 ist zum Einen ein Ausgang A15.1 des UND-Gliedes 28, der zugleich ein zweiter Ausgang der Regeleinrichtung 25 ist, über eine Verbindungsleitung L15.1 an einen Eingang E15.2 eines ersten Wechselventils 32 angeschlossen. Das erste Wechselventils 32 ist ein 2/2-Wegeventil, das ein Halteventil bildet. Zum Anderen ist ein Ausgang A15.2 des ODER-Gliedes 29, der zugleich ein dritter Ausgang der Regeleinrichtung 25 ist, über eine Verbindungsleitung L15.2 an einen Eingang E15.2 eines zweiten Wechselventils 33 der Ventileinrichtung 31 angeschlossen. Das zweite Wechselventils 33 ist ein 2/2-Wegeventil, das ein Belüftungsventil bildet.

Ein pneumatischer Eingang E16.1 der Ventileinrichtung 31 ist über eine pneumatische Anschlussleitung L16.1 mit einem pneumatischen Ausgang A16 einer Hauptluftbehälterleitung 34 des Fahrzeugs verbunden. Über eine pneumatische Anschlussleitung L16.2 kann eine hier nicht dargestellte weitere Ventileinrichtung angeschlossen sein, die einem ebenfalls nicht dargestellten Krafterzeuger einer weiteren Achse des gleichen Drehgestells vorgeschaltet ist. Über eine pneumatische Anschlussleitung L17 ist ein pneumatischer Ausgang A17 der Ventileinrichtung 31 mit einem Eingang E17 einer Druckkammer 35 des Federspeicherzylinders 12 verbunden.

In einer ersten Schaltstellung der Ventileinrichtung 31, bei der die beiden Wegeventile 32 und 33 nicht bestromt sind, sperrt die Ventileinrichtung 31 den Durchfluss zwischen der dem pneumatischen Eingang E16.1 und dem pneumatischen Ausgang A17 und entlüftet die Druckkammer 35 ins Freie.

In einer zweiten Schaltstellung der Ventileinrichtung 31, bei der das Belüftungsventil 33 nicht bestromt ist und das Halteventil 32 bestromt ist, sperrt die Ventileinrichtung 31 den Durchfluss zwischen dem pneumatischen Eingang E16.1 und dem pneumatischen Ausgang A17 und hält den Druck in der Druckkammer 35.

In einer dritten Schaltstellung der Ventileinrichtung 31, bei der die beiden Wegeventile 32 und 33 bestromt sind, gibt die Ventileinrichtung 31 den Durchfluss zwischen dem pneumatischen Eingang E16.1 und dem pneumatischen Ausgang A17 frei, so dass der Druck in der Druckkammer 35 steigt.

Das Gleitschutzgerät 20 und die mit den binären Gleitschutzsignalen S1, S2 des Gleitschutzgerätes 20 beaufschlagte Gleitschutzsteuereinrichtung 24 sind Teil einer als Ganzes mit 136; 236; 336 bezeichneten Ausführungsform eines Gleitschutzsystems der erfindungsgemäßen Bremseinrichtung 104; 204; 304 des Fahrzeugs 1.

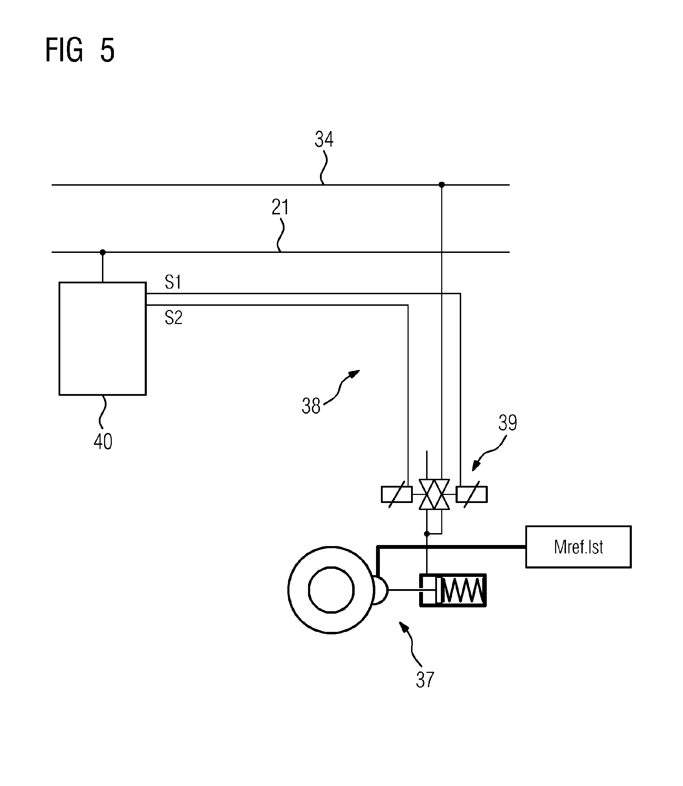

Die Gleitschutzsteuereinrichtung 24 des erfindungsgemäßen Gleitschutzsystems 136; 236; 336 ist zur Modellierung des Verhaltens einer in der Figur 5 gezeigten kraftschlussabhängigen nicht dynamischen Referenzbremse 37 (hier in Form einer elektro-pneumatischen Referenzbremse) geeignet ausgebildet, in Abhängigkeit des vorgegebenen Sollwertes MSoll und des zumindest einen Gleitschutzsignals S1, S2 einen gleitschutzkorrigierten elektrischen Sollwert Mges.Soll zu erzeugen, der einem von der Referenzbremse 37 bei einer Referenzmessung in Abhängigkeit des Sollwertes MSoll und der Gleitschutzsignale S1, S2 erzeugten gleitschutzkorrigierten Bremsmoment (MRef,Ist) entspricht. Die Referenzbremse 37 ist dabei Teil einer Referenzbremseinrichtung 38 und wird über eine Ventileinrichtung 39 von einem herkömmlichen Bremssteuergerät 40 angesteuert, wobei das Bremssteuergerät 40 dem Bremssteuergerät 20 der erfindungsgemäßen Bremseinrichtung gleicht.

Die Modellierung des Verhaltens der kraftschlussabhängigen nicht dynamischen Referenzbremse 37 ist bei der erfindungsgemäßen Bremseinrichtung mittels einer hier nicht gezeigten RC-Zeitglieder-Schaltung der Gleitschutzsteuereinrichtung 24 umgesetzt. Diese RC-Zeitglieder-Schaltung erzeugt den gleitschutzkorrigierten elektrischen Sollwert Mges.Soll in Form eines Spannungssignals.

Die Modellierung des Verhaltens der kraftschlussabhängigen nicht dynamischen Referenzbremse 37 kann aber auch mittels einer Operationsverstärker-Schaltung umgesetzt werden.

Über die Verbindungsleitung L7 ist die Regeleinrichtung 25 an ihrem Eingang E7 mit dem gleitschutzkorrigierten elektrischen Sollwert Mges.Soll beaufschlagt.

Bei einer hier nicht gezeigten Betriebsbremsung könnte das Bremssteuergerät 20 auch einen gleitschutzkorrigierten Sollwert an die Bremssteuereinrichtung 23 leiten. Dieser gleitschutzkorrigierten Sollwert würde dann von einem hier nicht gezeigten Ausgang der Bremssteuereinrichtung 23 direkt oder mittelbar über einen Signalumsetzer (z.B. einen CAN-Controller) an einen hier ebenfalls nicht gezeigten Eingang des elektronischen Reglers 27 geleitet werden und dort bei einer Betriebsbremsung als Sollwert zur Regelung des Gesamtbremsmomentes dienen.

Zur Regelung des Gesamtbremsmomentes Mges ist die Regeleinrichtung 25 geeignet ausgebildet, den Ist-Wert Fges.Ist der Messgröße F zu erfassen, daraus den aktuellen Wert Mges.Ist des Gesamtbremsmomentes zu bestimmen und mindestens eine regelbare Größe einer der beiden Bremsen 5, 6 derart zu regeln, dass das aus dem Ist-Wert Fges.Ist bestimmte aktuelle Gesamtbremsmoment Mges.Ist dem Sollwert Mges.Soll entspricht. Das Gesamtbremsmoment Mges wird also auf den Sollwert Mges.Soll geregelt.

Die Regeleinrichtung 25 ist insbesondere geeignet ausgebildet, in Abhängigkeit des Sollwertes Mges.Soll eine erste Größe - hier in Form des Erregerstroms der rotierenden Wirbelstrombremse - zu regeln, die das Bremsmoment M1 der kraftschlussabhängigen dynamischen Bremse 5 steuert.

Die Regeleinrichtung 25 ist außerdem geeignet ausgebildet, in Abhängigkeit des Sollwertes Mges.Soll eine zweite Größe zu regeln, die das Bremsmoment M2 der kraftschlussabhängigen nicht dynamischen Bremse 6 steuert. Bei den gezeigten Ausführungsformen 104; 204 und 304 der erfindungsgemäßen Bremseinrichtung (vgl. Figuren 4, 6 und 7) ist die Regeleinrichtung 25 geeignet ausgebildet, in Abhängigkeit des Sollwertes Mges.Soll binäre Ansteuersignale der Ventileinrichtung 31 der indirekt wirkenden pneumatischen Bremse 6 zu regeln. Als zweite Größe dienen hier also die Ansteuerströme der Ventileinrichtung 31.

Zur Regelung der zweiten Größe sind verschiedene Logiken - beispielsweise ausschließlich mittels elektronischer Bauelemente der Regeleinrichtung 25 - umgesetzt.

Eine erste Logik kann dabei geeignet ausgebildet sein, die zweite Größe (hier die Ansteuerströme der Ventileinrichtung 31) derart zu regeln, dass das Bremsmoment M2 der kraftschlussabhängigen nicht dynamischen Bremse 6 erhöht wird, wenn die kraftschlussabhängige dynamischen Bremse 5 ihr maximales Bremsmoment M1.max erreicht hat und das Gesamtbremsmoment Mges.Ist trotzdem kleiner als der Sollwert Mges.Soll ist.

Ob die kraftschlussabhängige dynamische Bremse 5 ihr maximales Bremsmoment M1.max erreicht hat, wird dabei durch eine Auswertung der am Ausgang A14 ausgesteuerten Spannung festgestellt. Beträgt diese 100% einer verfügbaren Spannung, so hat die dynamische Bremse 5 ihr maximales Bremsmoment erreicht.

Ob die kraftschlussabhängige dynamische Bremse 5 ihr maximales Bremsmoment erreicht hat, kann aber alternativ auch durch eine Messung und Auswertung des Erregerstroms des Retarders festgestellt werden. Hier kann eine maximal zulässige bzw. projektierte Stromstärke als Grenzwert dienen. Ist dieser Grenzwert erreicht, so hat die dynamische Bremse 5 ihr maximales Bremsmoment erreicht.

Die Figuren 4, 6 und 7 zeigen eine alternative zweite Logik, die geeignet ausgebildet ist, die zweite Größe derart zu regeln, dass das Bremsmoment M2 der kraftschlussabhängigen nicht dynamischen Bremse erhöht wird, wenn die kraftschlussabhängige dynamische Bremse ihr maximales Bremsmoment M1.max erreicht hat und das Gesamtbremsmoment Mges.Ist trotzdem kleiner als der Sollwert Mges.Soll ist und außerdem zum Einen das Freigabe-Signal S3 zur Freigabe der kraftschlussabhängigen nicht dynamischen Bremse anliegt und zum Anderen das Notfahrt-Signal S4 nicht anliegt.

Eine in den Figuren 4, 6 und 7 gezeigte dritte Logik ist geeignet ausgebildet, die zweite Größe derart zu regeln, dass das Bremsmoment M2 der kraftschlussabhängigen nicht dynamischen Bremse 6 gesenkt wird, wenn die kraftschlussabhängige dynamischen Bremse 5 nicht ihr maximales Bremsmoment M1.max erreicht hat oder kein Bremsmoment erzeugt und das Gesamtbremsmoment Mges.Ist trotzdem größer als der Sollwert Mges.Soll ist und/oder das Freigabe-Signal S3 zur Freigabe der kraftschlussabhängigen nicht dynamischen Bremse nicht anliegt und/oder das Notfahrt-Signal S4 anliegt.

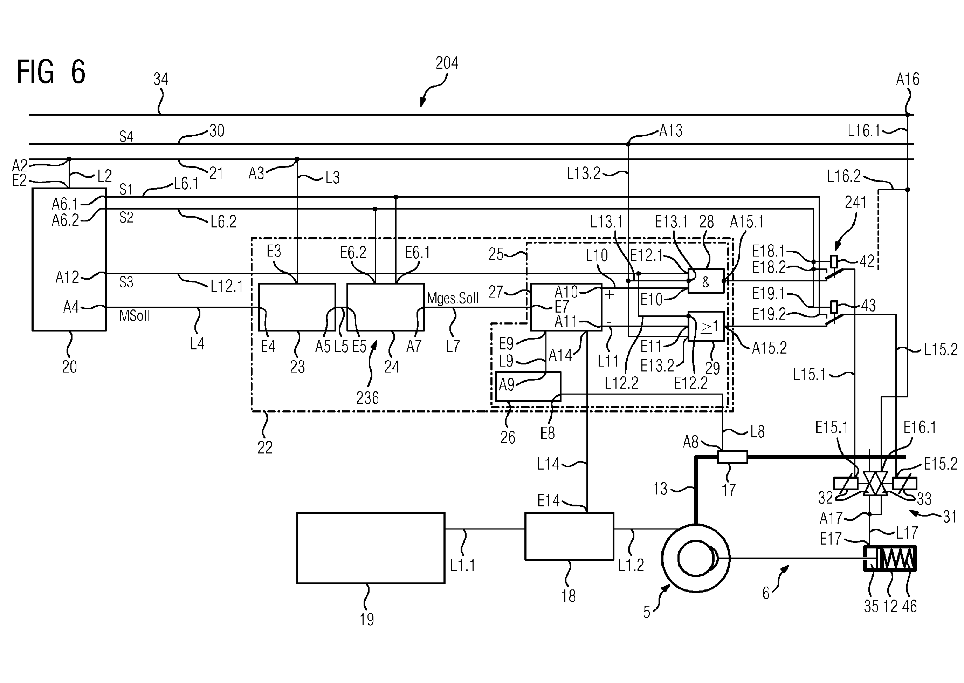

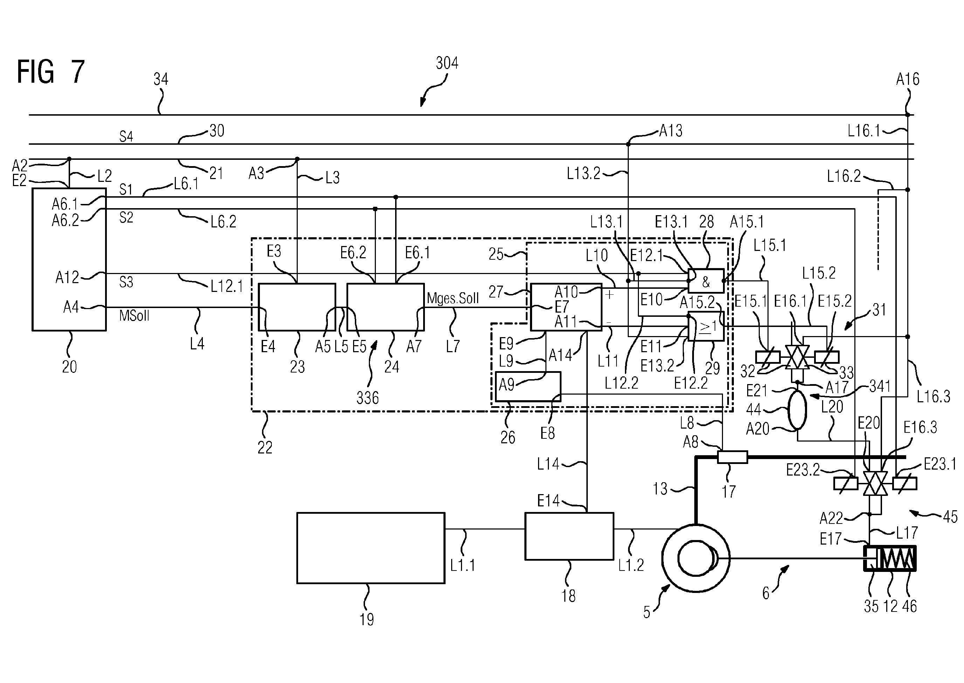

Die Ausführungsformen 204 und 304 (vgl. Figuren 6 und 7) der erfindungsgemäßen Bremseinrichtung weisen alle Elemente der ersten Ausführungsform 104 (vgl. Figur 3) auf. Es sind daher in den Figuren 6 und 7 Elemente, die denen nach Figur 4 entsprechen, mit gleichen Bezugszeichen versehen. Die beiden Ausführungsformen 204; 304 sind im Unterschied zu der ersten Ausführungsform 104 zusätzlich mit einer als Ganzes mit 241; 341 bezeichneten Ansteuereinrichtung versehen.

Die in Figur 6 gezeigte Ausführungsform 241 der Ansteuereinrichtung weist zwei Schaltelemente 42, 43 auf, die geeignet ausgebildet sind die Freigabe der Verbindungsleitungen L15.1, L15.2 in Abhängigkeit der Gleitschutzsignale zu regeln. Dabei sind Eingänge E18.1 und E18.2 eines ersten 42 der Schaltelemente und ein Eingang E19.1 des zweiten Schaltelementes 43 mit dem Ausgang A6.2 des Gleitschutzgerätes 20 verbunden. Ein Eingang E19.2 des zweiten Schaltelementes 43 ist dem Ausgang A6.1 des Gleitschutzgerätes 20 verbunden. Die Eingänge der Schaltelemente bilden zugleich Eingänge der Ansteuereinrichtung und sind mit den Gleitschutzsignalen S1 bzw. S2 des Gleitschutzgerätes 20 beaufschlagt.

Die in Figur 7 gezeigte Ausführungsform 341 der Ansteuereinrichtung weist ein Pufferreservoir 44 und eine Gleitschutzventileinrichtung 45 auf, wobei ein Ausgang A20 des Pufferreservoirs über eine pneumatische Leitung L20 mit einem Eingang E20 der Gleitschutzventileinrichtung 45 verbunden ist. Die Ansteuereinrichtung 341 ist in den pneumatischen Strang zwischen dem Ausgang A17 der Ventileinrichtung 31 und dem Eingang E17 der Druckkammer 35 derart integriert, dass der pneumatischer Ausgang A17 der Ventileinrichtung 31 mit einem Eingang E21 des Pufferreservoirs 44 und ein Ausgang A22 der Gleitschutzventileinrichtung 45 mit dem Eingang E17 der Druckkammer 35 verbunden sind. Ein Eingang E16.3 der Gleitschutzventileinrichtung 45 ist über eine Verbindungsleitung L16.3 mit dem Ausgang A16 der Hauptbehälterluftleitung 34 verbunden. Eingänge E23.1 und E23.2 der Gleitschutzventileinrichtung, die zugleich Eingänge der Ansteuereinrichtung 341 bilden, mit den Ausgängen A6.1 und A6.2 des Gleitschutzgerätes 20 verbunden und entsprechend mit den Gleitschutzsignalen S1 bzw. S2 beaufschlagt.

Die erfindungsgemäße Bremseinrichtung ist durch eine kontinuierliche Bremskraftablösung von der dynamischen Bremse 5 zur Stoppbremse 6 gekennzeichnet und arbeitet in folgender Weise:
Zunächst sei bezüglich der folgenden Ausführungen angemerkt, dass die Ausdrücke "UND", "ODER" und "NICHT" für die dem Fachmann bekannten logischen Verknüpfungen stehen.

Die Stoppbremse 5 wird durch das Signal S3 von außen (hier vom Bremssteuergerät) freigegeben, sobald eine Geschwindigkeitsschwelle unterschritten ist. Bei Entfall der Freigabe wird eine möglicherweise vorhandene Bremskraft der Stoppbremse vollständig abgebaut. Auch wenn ein Notfahrt-Signal S4 (Notfahrt-Befehl) an der Notfahrt-Schleife anliegt, wird eine möglicherweise vorhandene Bremskraft der Stoppbremse vollständig abgebaut.

Die Bremskraft der Stoppbremse 6 wird erhöht, wenn die Bremskraft der dynamischen Bremse 5 bereits ihr maximales Bremsmoment M1.max erreicht hat UND trotzdem das Sollbremsmoment Mges.Soll nicht erreicht wird.

Alternativ wird die Bremskraft der Stoppbremse 5 erhöht, wenn die Bremskraft der dynamischen Bremse 6 bereits ihr maximales Bremsmoment M1.max erreicht hat UND trotzdem das Sollbremsmoment Mges.Soll nicht erreicht wird UND die Anhaltebremse freigegeben ist UND der Befehl Notfahrt NICHT anliegt.

Die Bremskraft der Stoppbremse 5 wird reduziert, wenn die dynamische Bremse 6 NICHT ihr maximales Bremsmoment erzeugt (bzw. im Sinne einer Schalthysterese das maximale Bremsmoment mindestens um einen Anteil ε unterschreitet) UND trotzdem das Sollbremsmoment Mges.Soll überschritten ist.

Alternativ wird die Bremskraft der Stoppbremse reduziert, wenn die dynamische Bremse NICHT ihr maximales Bremsmoment erzeugt (bzw. im Sinne einer Schalthysterese das maximale Bremsmoment mindestens um einen Anteil ε unterschreitet) UND trotzdem das Sollbremsmoment überschritten ist ODER der Befehl Notfahrt anliegt ODER die Anhaltebremse NICHT freigegeben ist.

Die einzelnen Logiken zur Regelung des Bremsmoments der Anhaltebremse sind dabei rein elektronisch - also ohne Software umgesetzt, wobei die Auswahl der umzusetzenden Logiken mittels eines Programms erfolgt, die Regeleinrichtung also bezüglich der Auswahl der einzelnen Logiken als programmierbare Logikeinrichtung ausgebildet ist.

Bei der erfindungsgemäßen Bremseinrichtung erfolgt der Gleitschutz mittels des Gleitschutzsystems 136; 236; 336 in folgender Weise:
Das Gleitschutzsystem 136; 236; 336 steuert sowohl die dynamische Bremse 5 als auch die Stoppbremse 6 an. Die Gleitschutzsignale S1 und S2, die zur Ansteuerung der Steuer- und Regelelektronik 22 der erfindungsgemäßen Bremseinrichtung 104; 204; 304 dienen, sind kompatibel zu den Gleitschutzsignalen gestaltet, die zur Ansteuerung der in der Figur 5 gezeigten Referenzbremse 37 dienen. Daher ist das Gleitschutzgerät 20 der erfindungsgemäßen Bremseinrichtung 104; 204; 304 ein herkömmliches Gleitschutzgerät mit herkömmlicher, für eine pneumatische Bremse ausgelegter Gleitschutzsoftware.

Das Verhalten der herkömmlichen pneumatischen Referenzbremse 20 wird bei einem Gleitschutzeingriff elektrisch modelliert - hier nur beispielhaft durch RC-Zeitglieder. Diese RC-Zeitglieder werden mit den Gleitschutzsignalen S1 und S2 angesteuert. Das Bremsmoment Mref.Ist, das die pneumatische Referenzbremse aufgrund eines Gleitschutzeingriffes erzeugt, wird bei der erfindungsgemäßen Bremseinrichtung in Form eines Spannungssignals nachgebildet und dient als Sollwert für die weitere elektronische Regelung beider Bremsen. Dadurch wird erreicht, dass das dynamische Verhalten der beiden Bremsen 5 und 6 mit dem der herkömmlichen Referenzbremse 37 (hier Druckluftbremse) vergleichbar ist und daher die bestehende Gleitschutzsoftware des Gleitschutzgerätes 20 effektiv wirkt.

Bei den in den Figuren 6 und 7 gezeigten Ausführungsformen 236 und 336 des Gleitschutzsystems wirken die Gleitschutzsignale S1 und S2 parallel direkt auf die Stoppbremse 6, indem sie über Wechselventile ein Be- bzw. Entlüften des Bremszylinders 12 bewirken. Auch bei diesen Ausführungsformen wird bei Gleitschutzeingriffen als Regelgröße stets das Gesamtbremsmoment geregelt.

Bei der in der Figur 4 gezeigten ersten Ausführungsform 136 des Gleitschutzsystems liegen die Gleitschutzsignale S1 und S2 als Eingangssignale ausschließlich an der Steuer- und Regelelektronik 22 an. Gleitschutzeingriffe werden als Sollwert Mges.Soll innerhalb der der Gleitschutzsteuereinrichtung 24 realisiert und im Ergebnis durch die Regeleinrichtung 25 umgesetzt.

Ein Vorteil dieser ersten Ausführungsform 136 des Gleitschutzsystems ist, dass hier neben der ganzheitlichen Steuer-und Regelelektronik, in die die Funktion des Gleitschutzes integriert ist, nur ein Ventilpaar für alle Funktionen dient. Bei dieser Ausführungsform ist jedoch die Gleitschutzfunktion anfällig für Ausfälle und Funktionsstörungen innerhalb der Steuer- und Regelelektronik.

Bei der in der Figur 6 gezeigten zweiten Ausführungsform 236 des Gleitschutzsystems schaltet sich der Gleitschutz bei einem Gleitschutzeingriff zusätzlich über die Schaltelemente 42, 43 selbst elektrisch direkt auf die Ventile der Ventileinrichtung 31. Die Ausgänge A15.1 und A15.2 der Steuer- und Regelelektronik werden elektrisch vom Ventilpaar getrennt. Damit sind ein Vorrang der Gleitschutzsignale und damit eine höhere Sicherheit bei Ausfall oder Störung der Steuer- und Regelelektronik gewährleistet. Zur Umsetzung sind aber gegenüber der ersten Ausführungsform zusätzlich die Schaltelemente 42 und 43 erforderlich.

Bei der in der Figur 7 gezeigten dritten Ausführungsform sind getrennte Ventilpaare für Gleitschutz (Gleitschutzventileinrichtung 45) und Bremsdruckregelung (Ventileinrichtung 31) vorhanden. Die Ventile der Gleitschutzventileinrichtung 45 sind direkt an die Gleitschutzausgänge (Ausgänge A6.1 und A6.2 des Gleitschutzgerätes 20) angeschlossen. Die Ausgänge A15.1 und A15.2 der Steuer- und Regelelektronik 22 sind an das Ventilpaar der Ventileinrichtung 31 angeschlossen, das einen geringeren Querschnitt aufweist. Das Ventilpaar der Ventileinrichtung 31 ist an die Entlüftungsöffnung des Halteventils der Gleitschutzventileinrichtung 45 angeschlossen. Dazwischen ist der Luftbehälter eingefügt, welcher als Pufferreservoir dient. Somit wird verhindert, dass aufgrund des niedrigen Querschnitts des Ventilpaares der Ventileinrichtung 31 die Bremskraft zu langsam wieder aufgebaut wird. Außerdem wird dafür gesorgt, dass statt des Atmosphärendrucks der für die gewünschte Bremskraft passende Luftdruck anliegt, so dass keine Überbremsung eintreten kann.

Die Rückkoppelung des dem gemessenen Ist-Wert Fges.Ist entsprechenden Gesamtbremsmomentes Mges.Ist ermöglicht eine Regelung des Gesamtbremsmoments Mges unter kontinuierlicher Bremskraftablösung im unteren Geschwindigkeitsbereich, wenn die dynamische Bremse 5 an Bremsmoment verliert und daher die Stoppbremse 6 hinzubremsen muss. Dadurch, dass die dynamische Bremse 5 nicht bei einem zu bestimmenden Geschwindigkeitsschwellwert komplett angeschaltet werden muss, sondern im Rahmen ihrer Möglichkeiten bei niedrigen Geschwindigkeiten weiterhin mitbremst, kann die Stoppbremse 6 entsprechend leistungsschwächer ausgelegt werden. Die Steuer- und Regelelektronik 22 regelt auf dieser Weise dynamische Bremse und Stoppbremse.

Das Freigabe-Signal S3 bei einer Geschwindigkeitsschwelle ist erforderlich, um bei einem Ausfall oder Verlust von Bremsvermögen der dynamischen Bremse 5 im mittleren und hohen Geschwindigkeitsbereich eine thermische Überlastung der Stoppbremse 6 zu vermeiden. Die Zwangslösefunktion durch das Notfahrt-Signal S4 der Notfahrt-Schleife 30 soll in diversen Notfällen - z.B. bei einem Brand in einem Tunnel - verhindern, dass die Stoppbremse 6 anliegt und nicht mehr gelöst werden kann. Das ist insbesondere wichtig wenn die Bremskrafterzeugung wie in den gezeigten Ausführungsbeispielen passiv erfolgt, wenn also die in die Druckkammer 35 eingespeiste Druckluft gegen eine Anlegefeder 46 wirkt und die Bremse aktiv gelöst werden muss. Eine solche Stoppbremse hat den Vorteil, dass sie gleichzeitig als Parkbremse einsetzbar ist.

Die Verwendbarkeit bereits entwickelter und zertifizierter Gleitschutzgeräte 20 und deren Software erspart Neuentwicklungskosten.

## Patentansprüche

1. Gleitschutzsystem (136; 236; 336) einer Bremseinrichtung(4; 104; 204; 304)
- mit einem Gleitschutzgerät (20) und einer Gleitschutzsteuereinrichtung (24),
- bei dem zumindest ein Eingang (E6.1, E6.2) der Gleitschutzsteuereinrichtung (24) mit zumindest einem Ausgang (A6.1, A6.2) des Gleitschutzgerätes (20) verbunden und mit zumindest einem Gleitschutzsignal (S1, S2) des Gleitschutzgerätes (20) beaufschlagt ist
**dadurch gekennzeichnet, dass**
- die Gleitschutzsteuereinrichtung (24) zur Modellierung des Verhaltens einer kraftschlussabhängigen nicht dynamischen Referenzbremse (37) geeignet ausgebildet ist, in Abhängigkeit eines vorgegebenen Sollwertes (MSoll) und des zumindest einen Gleitschutzsignals (S1, S2) einen gleitschutzkorrigierten elektrischen Sollwert (Mges.Soll) zu erzeugen, der einem von der Referenzbremse (37) bei einer Referenzmessung in Abhängigkeit des Sollwertes (MSoll) und des zumindest einen Gleitschutzsignals (S1, S2) erzeugten gleitschutzkorrigierten Bremsmoment (Mref.Ist) entspricht.

2. Gleitschutzsystem (136; 236; 336) nach Anspruch 1, **dadurch gekennzeichnet, dass** die Modellierung des Verhaltens der kraftschlussabhängigen nicht dynamischen Referenzbremse (37) mittels einer RC-Zeitglieder-Schaltung oder einer Operationsverstärker-Schaltung umgesetzt ist, die den gleitschutzkorrigierten elektrischen Sollwert (Mges.Soll) in Form eines Spannungssignals erzeugt.

3. Gleitschutzsystem (136; 236; 336) nach einem der Ansprüche 1 oder 2,
**dadurch gekennzeichnet, dass** ein Eingang (E7) einer Regeleinrichtung (25) mit einem Ausgang (A7) der Gleitschutzsteuereinrichtung (24) verbunden und mit dem gleitschutzkorrigierten elektrischen Sollwert (Mges.Soll) beaufschlagt ist.

4. Gleitschutzsystem (136; 236; 336) nach Anspruch 3, **dadurch gekennzeichnet, dass** die Regeleinrichtung (25) geeignet ausgebildet ist, in Abhängigkeit des gleitschutzkorrigierten elektrischen Sollwertes (Mges.Soll) eine erste Größe zu regeln, die das Bremsmoment (M1) einer kraftschlussabhängigen dynamischen Bremse (5) steuert.

5. Gleitschutzsystem (136; 236; 336) nach Anspruch 4, **dadurch gekennzeichnet, dass** die Regeleinrichtung (25) geeignet ausgebildet ist, in Abhängigkeit des gleitschutzkorrigierten elektrischen Sollwertes (Mges.Soll) einen Erregerstrom einer rotierenden Wirbelstrombremse zu regeln.

6. Gleitschutzsystem (136; 236; 336) nach einem der Ansprüche 3 bis 5,
**dadurch gekennzeichnet, dass** die Regeleinrichtung (25) geeignet ausgebildet ist, in Abhängigkeit des gleitschutzkorrigierten elektrischen Sollwertes (Mges.Soll) eine zweite Größe zu regeln, die das Bremsmoment (M2) einer kraftschlussabhängigen nicht dynamischen Bremse (6) steuert.

7. Gleitschutzsystem (136; 236; 336) nach Anspruch 6, **dadurch gekennzeichnet, dass** die Regeleinrichtung (25) geeignet ausgebildet ist, in Abhängigkeit des gleitschutzkorrigierten elektrischen Sollwertes (Mges.Soll) zumindest ein Ansteuersignal einer Ventileinrichtung (31) einer direkt oder indirekt wirkenden pneumatischen Reibungsbremse (6) zu regeln.

8. Gleitschutzsystem (236; 336) nach einem der Ansprüche 1 bis 7,
**gekennzeichnet, durch**
- eine Ansteuereinrichtung (241; 341),
- wobei zumindest ein Eingang (E18.1, E18.2, E19.1, E19.2;
E23.1, E23.2) der Ansteuereinrichtung (241; 341) mit dem zumindest einen Ausgang (A6.1, A6.2) des Gleitschutzgerät (20) verbunden und mit dem zumindest einen Gleitschutzsignal (S1, S2) des Gleitschutzgerätes (20) beaufschlagt ist.

9. Gleitschutzsystem (236) nach Anspruch 8,
**dadurch gekennzeichnet, dass**
- zumindest eine Verbindungsleitung (L15.1, L15.2) einen Ausgang (A15.1, A15.2) der Regeleinrichtung (25) mit einem Eingang der Ventileinrichtung verbindet, und
- dass die Ansteuereinrichtung (241) zumindest ein Schaltelement (42, 43) aufweist, das geeignet ausgebildet ist die Freigabe der zumindest einen Verbindungsleitung (L15.1, L15.2) in Abhängigkeit des zumindest einen Gleitschutzsignals (S1, S2) zu regeln.

10. Gleitschutzsystem (336) nach Anspruch 8,
**dadurch gekennzeichnet, dass**
- zumindest eine Verbindungsleitung (L15.1, L15.2) einen Ausgang (A15.1, A15.2) der ersten Regeleinrichtung (25) mit einem Eingang der Ventileinrichtung (31) verbindet, wobei ein pneumatischer Eingang (E16.1) der Ventileinrichtung (31) mit einem pneumatischen Ausgang (A16) einer Hauptbehälterluftleitung (34) und ein pneumatischer Ausgang (A17) der Ventileinrichtung (31) mit einem Eingang (E21) eines Zwischenreservoirs (44) verbunden sind,
- dass die Ansteuereinrichtung (341) eine Gleitschutzventileinrichtung (45) aufweist, wobei zumindest ein Eingang (E23.1, E23.2) der Gleitschutzventileinrichtung (45) den zumindest einen Eingang der Ansteuereinrichtung bildet und
- dass ein pneumatischer Eingang (E20) der Gleitschutzventileinrichtung (45) mit einem Ausgang (A20) des Zwischenreservoirs (44) und ein pneumatischer Ausgang (A22) der Gleitschutzventileinrichtung (45) mit einer Druckkammer (35) der pneumatischen Bremse (6) verbunden sind.

11. Bremseinrichtung (4; 104; 204; 304) eines Fahrzeugs **gekennzeichnet, durch**
ein Gleitschutzsystem (136; 236; 336) nach einem der Ansprüche 1 bis 10.

12. Bremseinrichtung (4; 104; 204; 304) nach Anspruch 11, **gekennzeichnet, durch**
- eine kraftschlussabhängige dynamische erste Bremse (5), die ein erstes Bremsmoment (M1) in einen Radsatz (3) eines Fahrzeugs (1) einleitet,
- **durch** eine kraftschlussabhängige nicht dynamischen zweiten Bremse (6), die ein zweites Bremsmoment (M2) in den Radsatz (3) des Fahrzeugs (1) einleitet, und
- **durch** eine Messeinrichtung (17) die geeignet ausgebildet ist, einen Ist-Wert (Fges.Ist) einer Messgröße (F) zu erfassen, der einem aus den beiden Bremsmomenten (M1, M2) resultierenden Gesamtbremsmoment (Mges.Ist) entspricht,
- wobei die Regeleinrichtung (25) des Gleitschutzsystems (136; 236; 336) geeignet ausgebildet ist, den Ist-Wert (Fges.Ist) der Messgröße (F) zu erfassen und das daraus bestimmte Gesamtbremsmoment (Mges.Ist) auf den gleitschutzkorrigierten elektrischen Sollwert (Mges.Soll) zu regeln.

13. Bremseinrichtung (4; 104; 204; 304) nach Anspruch 12, **gekennzeichnet, durch**
- eine Bremsmomentstütze (13), an der über eingangsseitige Wirkverbindungen (14A, 14B, 15) mit den beiden Bremsen (5, 6) die beiden Bremsmomente (M1, M2) abgestützt sind und mittels derer über eine ausgangsseitige Wirkverbindung (16) mit dem Fahrzeug (1) das aus den beiden Bremsmomenten (M1, M2) resultierendes Gesamtbremsmoment (Mges) am Fahrzeug (1) abgestützt ist,
- wobei die Messeinrichtung (17) in die Bremsmomentstütze (13) integriert ist.

14. Gleitschutzverfahren einer Bremseinrichtung (4; 104; 204; 304)
- bei dem zumindest ein Eingang (E6.1, E6.2) einer Gleitschutzsteuereinrichtung (24), der mit zumindest einem Ausgang (A6.1, A6.2) eines Gleitschutzgerätes (20) verbunden ist, mit zumindest einem Gleitschutzsignal (S1, S2) des Gleitschutzgerätes (20) beaufschlagt ist
**dadurch gekennzeichnet, dass**
- die Gleitschutzsteuereinrichtung (24) zur Modellierung des Verhaltens einer kraftschlussabhängigen nicht dynamischen Referenzbremse (37) in Abhängigkeit eines vorgegebenen Sollwertes (MSoll) und des zumindest einen Gleitschutzsignals (S1, S2) einen gleitschutzkorrigierten elektrischen Sollwert (Mges.Soll) erzeugt, der einem von der Referenzbremse (37) bei einer Referenzmessung in Abhängigkeit des Sollwertes (MSoll) und des zumindest einen Gleitschutzsignals (S1, S2) erzeugten gleitschutzkorrigierten Bremsmoment (MRef.Ist) entspricht.

15. Gleitschutzverfahren nach Anspruch 14,
**dadurch gekennzeichnet, dass**
- dass eine Regeleinrichtung (25) mit dem gleitschutzkorrigierten elektrischen Sollwert (Mges.Soll) beaufschlagt wird
und
- dass die Regeleinrichtung (25) in Abhängigkeit des gleitschutzkorrigierten elektrischen Sollwertes (Mges.Soll) eine erste Größe regelt, die das Bremsmoment (M1) einer kraftschlussabhängigen dynamischen Bremse (5) steuert.

16. Gleitschutzverfahren nach einem der Ansprüche 14 oder 15, **dadurch gekennzeichnet, dass**
- dass eine Regeleinrichtung (25) mit dem gleitschutzkorrigierten elektrischen Sollwert (Mges.Soll) beaufschlagt wird und
- dass die Regeleinrichtung (25) in Abhängigkeit des gleitschutzkorrigierten elektrischen Sollwertes (Mges.Soll) eine zweite Größe regelt, die das Bremsmoment (M2) einer kraftschlussabhängigen nicht dynamischen Bremse (6) steuert.
